# EUROPEAN PATENT APPLICATION

(11) **EP 3 611 213 A1**
(43) Date of publication of application: **19.02.2020**
(21) Application number: 18306120.9
(22) Date of filing: 14.08.2018
(51) Int. Cl.: C08G 65/333, C08L 71/02, C08L 61/06, C08G 65/331, C08G 65/329, C08G 65/332, C08G 65/334

(54) **COMPOSITION COMPRISING A POLYALKYLENE OXIDE-BASED POLYMER**

(71) Applicant: RHODIA OPERATIONS, 75009 Paris (FR)
(72) Inventor: LANDELLE, Grégory, 69110 Sainte-Foy-Lès-Lyon (FR); AL RAHAL AL ORABI, Rabih, 69006 Lyon (FR); TOURAUD, Franck, 38780 Eyzin Pinet (FR); VERGELATI, Caroll, 38118 Saint Baudille de la Tour (FR); GHOSH, Soumyadeb, 391410 Vadodara, Gujarat (IN); DARJI, Hemang, 390010 Vadodara, Gujarat (IN)
(74) Representative: Roussel, Sandrine

(57) **Abstract**

The present invention concerns a polyalkylene oxide-based polymer functionalized at one or both ends with a nitrogen-containing heterocyclic group bearing 3 carbonyl functions. The invention also concerns processes for producing said polymer and articles obtained thereof.

## Description

The present invention concerns a polyalkylene oxide-based polymer functionalized at one or both ends with a nitrogen-containing heterocyclic group bearing 3 carbonyl functions. The invention also concerns processes for producing said polymer and articles obtained thereof.

### PRIOR ART

The following discussion of the prior art is provided to place the invention in an appropriate technical context and enable the advantages of it to be more fully understood. It should be appreciated, however, that any discussion of the prior art throughout the specification should not be considered as an express or implied admission that such prior art is widely known or forms part of common general knowledge in the field.

Supramolecular materials are formed by small chain-length polymers or molecules bonded together by physical bonds such as, for example, hydrogen bonds, ionic bonds, hydrophobic bonds, and more particularly hydrogen bonds also known as "H bridges" or "H bonds". An advantage of these supramolecular polymers is that these physical bonds are reversible, that is to say that they may easily break leading to the partial or complete depolymerization of said polymers under the influence of various factors such as temperature. A number of reports demonstrated self-healing properties in such materials and suggested their various applications such as in self-healing coatings. To impart self-healing properties, polymers of low glass-transition temperature (T_{g}) are used to obtain the molecular mobility required for formation of the supramolecular bond, as well as for effective contact between the surfaces to be joined for the healing process.

Supramolecular materials, since made from flexible low-T_{g} polymers, have very low stiffness and dimensional stability. Further, due to supramolecular bonds, which are intrinsically weaker than typical covalent bonds, the supramolecular materials are also mechanically weak.

Cortese et al., J. Am. Chem. Soc., 2012, 134, 3671-3674 reports telechelic supramolecular polymers based on poly(propylene oxide) (PPO), thymine (Thy) and diaminotriazine (DAT) having complementary interactions that can suppress mesoscopic order and thus lead to a counterintuitive change in material properties. It discloses supramolecular polymer with weakly self-complementary stickers (DAT), DAT-PPO-2000-DAT, which is a liquid.

Bras et al., Macromolecules 2013, 46, 9446-9454 reports small angle neutron scattering (SANS) study of the association of heterocomplementary telechelic polypropylene glycol (PPG) polymers, bearing either diaminotriazine (DAT) or thymine (Thy) stickers as end-groups, both in the melt and in dilute solutions. It discloses bifunctional macromonomers DAT-PPG-DAT having weaker self-association.

### INVENTION

The applicant has discovered, entirely surprisingly, that the use of a polyalkylene oxide-based polymer functionalized at one or both ends with an isocyanuric acid moiety and/or a barbituric acid moiety, and having a number-average molecular weight (Mn) from 100 to 35000 g/mol, more preferably from 300 to 25000 g/mol.permits to produce compositions having a high mechanical strength and an inherent self-healing property.

The present invention thus concerns a polyalkylene oxide-based polymer functionalized at one or both ends with an isocyanuric acid moiety and/or a barbituric acid moiety, and having a number-average molecular weight (Mn) from 100 to 35000 g/mol, more preferably from 300 to 25000 g/mol.

The invention also concerns a composition comprising the functionalized polyalkylene oxide-based polymer of the invention and a polyalkylene oxide-based polymer functionalized at one or both ends with a nitrogen-containing heterocyclic group bearing at least a function chosen in the group consisting of primary amine and secondary amine.

Functionalized polyalkylene oxide-based polymers of the invention also have the faculty of forming three-dimensional networks with other functionalized polyalkylene oxide-based polymer, notably with polyalkylene oxide-based polymer functionalized at one or both ends with a nitrogen-containing heterocyclic group bearing at least a function chosen in the group consisting of primary amine and secondary amine. Those three-dimensional networks may have anchoring points that are free to aggregate in the form of clusters, thus reinforcing the molecular cohesion of the constituted associations. The organization specific to the functionalized polyalkylene oxide-based polymers of the invention persist well beyond ambient temperature, since most dissociation temperatures of the physical crosslinking nodes that maintain their structure are evaluated between 35°C and 50°C. Even more remarkable, for some of the compositions studied, a three-dimensional order remains perennial up to 130°C.

Functionalized polyalkylene oxide-based polymers of the invention also exhibit a high thermal stability and do not degrade up to 220°C.

The invention also concerns compositions comprising at least the functionalized polyalkylene oxide-based polymer of the invention, and a phenol-carbonyl condensation product.

Such a composition notably exhibits a good level of mechanical properties, such as stiffness and tensile strength, and can be self-healed, recovering about the same level of mechanical properties; and even higher mechanical properties, such as modulus, when the healing process is performed at higher temperatures.

The invention also concerns a composition comprising at least:
- a polyalkylene oxide-based polymer functionalized at one or both ends with an isocyanuric acid moiety and/or a barbituric acid moiety, and having a number-average molecular weight (Mn) from 100 to 35000 g/mol, more preferably from 300 to 25000 g/mol;
- a polyalkylene oxide-based polymer functionalized at one or both ends with a nitrogen-containing heterocyclic group bearing at least a function chosen in the group consisting of primary amine and secondary amine; and
- a phenol-carbonyl condensation product.

Such a composition notably exhibits a good level of mechanical properties, such as stiffness and tensile strength, and an inherent self-healing property. Healing occurs permitting to recover about the same level of mechanical properties, when the healing process is performed at higher temperatures.

Other characteristics, details and advantages of the invention will emerge even more fully upon reading the description which follows.

### DEFINITIONS

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The term "and/or" includes the meanings "and", "or" and also all the other possible combinations of the elements connected to this term.

The terms "comprise" and "comprising" are used in the inclusive, open sense, meaning that additional elements may be included. Throughout this specification, unless the context requires otherwise the word "comprise", and variations, such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

The term "consisting of' means the embodiment necessarily includes the listed components only and no other unlisted components are present.

The term "consisting essentially of' means the embodiment necessarily includes the listed components, but may also include additional unnamed, unrecited elements, notably which do not materially affect the basic and novel characteristic of the composition.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a temperature range of about 120°C to about 150°C should be interpreted to include not only the explicitly recited limits of about 120°C to about 150°C, but also to include sub-ranges, such as 125°C to 145°C, 130°C to 150°C, and so forth, as well as individual amounts, including fractional amounts, within the specified ranges, such as 122.2°C, 140.6°C, and 141.3°C, for example.

The term "between" should be understood as being inclusive of the limits.

It is specified that, in the continuation of the description, unless otherwise indicated, the values at the limits are included in the ranges of values which are given. It should be noted that in specifying any range of concentration, any particular upper concentration can be associated with any particular lower concentration.

As used herein, the term "hydrocarbon group" refers to a group mainly consisting of carbon atoms and hydrogen atoms, which group may be saturated or unsaturated, linear, branched or cyclic, aliphatic or aromatic. The term "hydrocarbyl" used in the description and the claims describes radicals which are based on hydrocarbons with the stated number of carbon atoms and which may be pure hydrocarbon radicals but may also have substituents. Hydrocarbon groups of the present invention may be alkyl groups, alkenyl groups, alkynyl groups, aryl groups, alkylaryl groups, aryalkyl groups, heterocyclic groups, and/or alkylheterocyclic groups.

Hydrocarbon groups of the present invention may be alkyl groups, alkenyl groups, alkynyl groups, aryl groups, alkylaryl groups, aryalkyl groups, heterocyclic groups, and/or alkylheterocyclic groups.

As used herein, the terminology "(Cₙ-Cₘ)" in reference to an organic group, wherein n and m are each integers, indicates that the group may contain from n carbon atoms to m carbon atoms per group.

As used herein, "alkyl" should be construed under the ordinary meaning. Alkyl groups include saturated hydrocarbons having one or more carbon atoms, including straight-chain alkyl groups, such as methyl, ethyl, propyl, butyl, pentyl, hexyl, heptyl, octyl, nonyl, decyl, cyclic alkyl groups (or "cycloalkyl" or "alicyclic" or "carbocyclic" groups), such as cyclopropyl, cyclopentyl, cyclohexyl, cycloheptyl, and cyclooctyl, branched-chain alkyl groups, such as isopropyl, tert-butyl, sec-butyl, and isobutyl, and alkyl-substituted alkyl groups, such as alkyl-substituted cycloalkyl groups and cycloalkyl-substituted alkyl groups. The term "aliphatic group" includes organic moieties characterized by straight or branched-chains, typically having between 1 and 22 carbon atoms. In complex structures, the chains may be branched, bridged, or crosslinked. Aliphatic groups include alkyl groups, alkenyl groups, and alkynyl groups.

As used herein, "alkenyl" or "alkenyl group" refers to an aliphatic hydrocarbon radical which can be straight or branched, containing at least one carbon-carbon double bond. Examples of alkenyl groups include, but are not limited to, ethenyl, propenyl, n-butenyl, i-butenyl, 3-methylbut-2-enyl, n-pentenyl, heptenyl, octenyl, decenyl, and the like. The term "alkynyl" refers to straight or branched chain hydrocarbon groups having at least one triple carbon to carbon bond, such as ethynyl.

The term "aryl group" includes unsaturated and aromatic cyclic hydrocarbons as well as unsaturated and aromatic heterocycles containing one or more rings. Aryl groups may also be fused or bridged with alicyclic or heterocyclic rings that are not aromatic so as to form a polycycle, such as tetralin. An "arylene" group is a divalent analog of an aryl group.

The term "heterocyclic group" includes closed ring structures analogous to carbocyclic groups in which one or more of the carbon atoms in the ring is an element other than carbon, for example, nitrogen, sulfur, or oxygen. Heterocyclic groups may be saturated or unsaturated. Additionally, heterocyclic groups, such as pyrrolyl, pyridyl, isoquinolyl, quinolyl, purinyl, and furyl, may have aromatic character, in which case they may be referred to as "heteroaryl" or "heteroaromatic" groups.

It should be noted that a chemical moiety that forms part of a larger compound may be described herein using a name commonly accorded it when it exists as a single molecule or a name commonly accorded its radical. For example, the terms "pyridine" and "pyridyl" are accorded the same meaning when used to describe a moiety attached to other chemical moieties.

By hydrocarbylene group is meant divalent group comprising only carbon and hydrogen atoms formed by removing two hydrogen atoms from a hydrocarbon, the free valencies of which are not involved in a double bond. The hydrocarbylene group can be saturated or unsaturated, linear, branched or cyclic. When the hydrocarbylene group is cyclic it may be an aryl group formed by removing two hydrogen atoms from an aromatic hydrocarbon i.e. from a cyclic conjugated unsaturated hydrocarbon ring having a number of delocalized π electrons following the Huckel rule. When the hydrocarbylene group is interrupted by one or more heteroatoms or heteroatoms containing groups it can be interrupted by one or more ether linkage -O-, one or more thioether linkage -S-, one or more amide linkage -CO-NH- or one or more urea linkage -NH-CO-NH-.

The terms "polyethylene oxide", "PEO", "EO", "polyethylene glycol" and "PEG" are used interchangeably and refer to synthetic polymers of ethylene oxide.

The terms "polypropylene oxide", "PPO", "PO", "polypropylene glycol" and "PPG" are used interchangeably and refer to synthetic polymers of propylene oxide.

### DETAILS OF THE INVENTION

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively and any and all combinations of any or more of such steps or features.

The functionalized polyalkylene oxide-based polymer of the invention at one or both ends, may, for instance, include a polymer having a main chain including a repeating unit represented by a general formula: -(R-O)ₙ- ; wherein R represents an alkylene group having 1 to 14 carbon atoms, and n is the number of repeating units and is a positive integer, n may be comprised for instance between 2 and 800, preferably from 4 to 600, more preferably from 6 to 400. The main chain backbone of the polyalkylene oxide-based polymer may be composed of only one type of repeating unit or two or more types of repeating units.

Examples of the main chain backbone of the polyalkylene oxide-based polymer include polyethylene oxides, polypropylene oxides, polytetramethylene oxides (i.e polybutylene oxides), polyethylene oxide-polypropylene oxide copolymers, and polypropylene oxide-polybutylene oxide copolymers, or block copolymers of such units. Of these, polypropylene oxides are preferred.

The polyalkylene oxide-based polymer, preferably a polymer of polyethylene oxide and/or polypropylene oxide, may refer to a polymer of varying molecular weights, and of various types, ranging from linear multi-block copolymers, side-chain grafted block copolymers, and hyper-branched block copolymers to star-shaped block copolymers. Said polymers may also comprise end-modified and chain-extended polymers of various types.

Polyalkylene oxide-based polymers of the invention may represent a homopolymer or a copolymer which can be obtained by polymerization of one or more linear, cyclic and/or branched, monounsaturated or polyunsaturated monomers. Polymer may represent a homopolymer or a copolymer which can be obtained by ring-opening polymerization of epoxides, lactones or lactams.

Preferably, the polyalkylene oxide-based polymer, capable of forming all or part of the polymer backbone according to the invention, is of formula PO, in which PO represents a homopolymer or a copolymer which can be obtained by polymerization of one or more linear, cyclic and/or branched, polyunsaturated (preferably diunsaturated), C₂-C₁₀, preferably C₂-C₄ alkylene oxides. PO preferably represents a homopolymer or a copolymer which can be obtained by polymerization of one or more diunsaturated, linear or branched C₂-C₄ alkylene oxides. More preferably, PO represents a polymer chosen from a polyethylene oxides, a polypropylene oxides, polytetramethylene oxides (polybutylene oxides), polyethylene oxide-polypropylene oxide copolymers, and polypropylene oxide-polybutylene oxide copolymers. Of these, polypropylene oxides are preferred.

Polyalkylene oxide-based polymers of the invention may comprise for instance the units as follows:
- -EOₓPO_{y}EO_{z}-, wherein x is from 1 to 500, y is from 0 to 800, z is from 1 to 500;
- -POₓEO_{y}PO_{z}-, wherein x is from 1 to 500, y is from 0 to 800, z is from 1 to 500; or
- -EOₓPO_{y}-, wherein x is from 1 to 1000, y is from 1 to 1000.

The x, y and z values represent the average value of each respective repeat unit. The values of x, y, and z are typically determined based on molecular weight.

Examples of such polymers are for instance copolymers supplied by Solvay under trade name Antarox® (such as Antarox® L61, Antarox® 17R2, etc.), by BASF under trade name Pluronic® (such as Pluronic® 25R4), by DOW under trade name Tergitol® (such Tergitol® L81), etc.

The polyalkylene oxide-based polymer of the invention may have an average molecular weight (Mₙ) from 100 to 35000 g/mol, more preferably from 300 to 25000 g/mol; measured by NMR spectroscopy or by gel permeation chromatography.

The isocyanuric acid moiety and/or a barbituric acid moiety may be attached to the polyalkylene oxide-based polymer directly with a single bond or via a linker, such as for instance a linear or branched C₁-C₆ alkylene group, C₆-C₁₂ aryl, C₇-C₁₂ alkaryl and C₇-C₁₂ alkylaryl groups, ether function, carbonyl function, ester function, carboxyl function, amine function, amide function, an urea or carbamate functional group, and/or a combination thereof.

The isocyanuric acid moiety may be preferably chosen in the group consisting of (it being understood that all the tautomeric forms are included) a substituted or unsubstituted trioxotriazine-based group, such as isocyanuric acid; notably the isocyanuric acid moiety as follows:

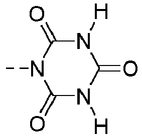

The barbituric acid moiety may be preferably chosen in the group consisting of (it being understood that all the tautomeric forms are included) a substituted or unsubstituted trioxypyrimidine group, such as barbituric acid (or malonylurea or 6-hydroxyuracil), notably the barbituric acid moiety as follows:

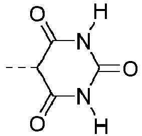

Preferably, polyalkylene oxide-based polymer of the invention is a polypropylene oxide polymer functionalized at one or both ends with isocyanuric acid (ICA), such as ICA-PPO or ICA-PPO-ICA. Polyalkylene oxide-based polymer of the invention may also be a polypropylene oxide polymer functionalized at one or both ends with barbituric acid (BA), such as BA-PPO or BA-PPO-BA.

Preferably, the rate of chain-end functionalization of the functionalized polyalkylene oxide-based polymer of the invention ranges from 70 to 100%, more preferably from 85 to 99%; as calculated by 1H NMR comparison of signal corresponding to functionalized end-groups with the isocyanuric acid moiety and/or the barbituric acid moiety, and signal corresponding to non-functionnalized end-groups.

The functionalized polymer of the invention may correspond to formula (A) as represented hereinafter: 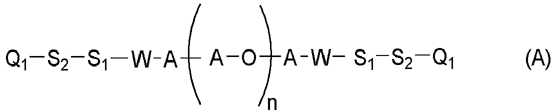 Wherein
- A is an alkanediyl group, O is oxygen;
- S₁ and S₂ which may be the same or different are nil or a C₁-C₂₀ hydrocarbylene groups optionally interrupted by one or more heteroatoms or heteroatoms containing groups chosen from the list consisting of -O-, -S-, -(C=O)-, -(C=S)-, -CO-NH-,-COO-, -NH-CO-NH-, -NH-COO-;
- W is a divalent group selected from the list consisting of -*CH₂-NH-, -*NH-CH₂-, -*CH₂-NR-, -*NR-CH₂-, -*CH₂-O-, -*O-CH₂-, -*CH₂-S-, -*S-CH₂-, -*S-CH₂-CH₂-, -*CH₂-CH₂-S-, -*NH(C=O)-, -(*C=O)NH-, -*NR(C=O)-, -(*C=O)NR-, -(*C=O)O-, -*O(C=O)-, -NH-CO-NH- and -NH-COO- wherein the atom designed with * is linked to S₁, and R is independently H or a C₁-C₂₀ hydrocarbyl group, such as notably a methyl, ethyl, propyl, benzyl, triphenylmethyl, or a benzylidene group;
- Q₁ is an isocyanuric acid moiety or a barbituric acid moiety; and
- n is an integer ranging from 2 and 800, preferably from 4 to 600, more preferably from 6 to 400.

Preferably the functionalized polyalkylene oxide-based polymer of the invention is a polymer of formula (B) as follows: 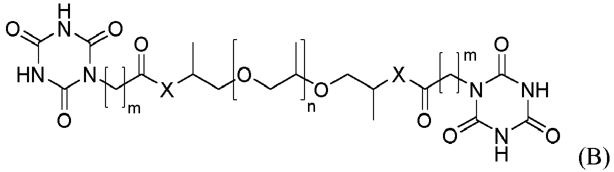 wherein n is comprised between 2 and 800, preferably from 4 to 600, more preferably from 6 to 400, m is comprised between 0 and 20, preferably from 1 to 12, X is an oxygen or a nitrogen atom.

The functionalized polyalkylene oxide-based polymer of the invention mays also be a polymer of formula (C) as follows: 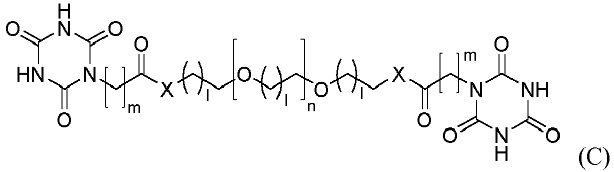 wherein n is comprised between 2 and 800, preferably from 4 to 600, more preferably from 6 to 400, m is comprised between 0 and 20, preferably from 1 to 12, 1 is comprised between 1 and 5, X is an oxygen or a nitrogen atom.

The functionalized polyalkylene oxide-based polymer of the invention mays also be a polymer of formula (D) as follows: 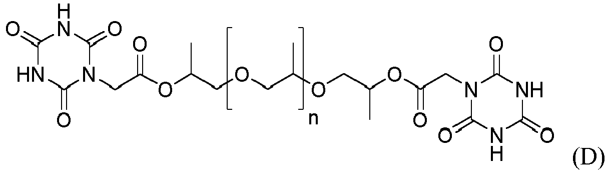 wherein n is comprised between 2 and 800, preferably from 4 to 600, more preferably from 6 to 400.

The polyalkylene oxide-based polymer of the invention may be prepared by any process normally employed by a person skilled in the art, such as for instance by polymerization or reaction between a polyalkylene oxide-based polymer intermediate and a compound comprising an isocyanuric acid moiety and/or a barbituric acid moiety.

The polymer of the invention can be polymerized in a one-step process in the presence of a suitable catalyst in order to achieve the desired product. Alternatively, the polyalkylene oxide-based polymer may be first polymerized or prepolymerized and subsequently co-reacted with a compound comprising an isocyanuric acid moiety and/or a barbituric acid moiety, to obtain such product. Such a polymer can be synthesized by either a solution or a bulk reaction process.

It is perfectly possible to use as raw material a polyalkylene oxide-based polymer comprising at one or both ends a hydroxyl function, or a polyalkylene oxide-based polymer comprising at one or both ends a primary amine function.

The compound comprising an isocyanuric acid moiety and/or a barbituric acid moiety may comprise a suitable leaving group such as for example halogen or a reactive functionality like ester function, amide function, acyl chloride function, isocyanate function.

Compounds comprising an isocyanuric acid moiety and/or a barbituric acid moiety is preferably chosen in the group consisting of: benzyl 2-(2,4,6-trioxo-1,3,5-triazinan-1-yl)acetate, benzyl 2-(2,4,6-trioxohexahydropyrimidin-5-yl)acetate, methyl 2-(2,4,6-trioxo-1,3,5-triazinan-1-yl)acetate, methyl 2-(2,4,6-trioxohexahydropyrimidin-5-yl)acetate, 1-(2-chloroethyl)-1,3,5-triazinane-2,4,6-trione, 5-(2-chloroethyl)pyrimidine-2,4,6(1H,3H,5H)-trione.

The molar ratio between the polyalkylene oxide-based polymer and the compound comprising an isocyanuric acid moiety and/or a barbituric acid moiety may be comprised between 1:1 and 1:4, preferably between 1:1.5 and 1:2.5.

Reaction between the polyalkylene oxide-based polymer and the compound comprising an isocyanuric acid moiety and/or a barbituric acid moiety may occur at a temperature from 20°C to 300°C, preferably from a temperature from 50°C to 230°C. Said reaction may be made in bulk conditions or also in presence of solvents, such as polar solvents, for instance tetrahydrofuran, dimethylformamide or dimethylsulfoxide. Said reaction may be carried out with or without catalyst for instance. The catalyst for the said reaction can be an acid catalyst, a base catalyst, a Lewis Acid catalyst, a titanium-based catalyst, an organotin catalyst or a catalyst commonly used for ester or amide synthesis.

Notably the functionalized polymer of formula (A) as represented hereinafter: 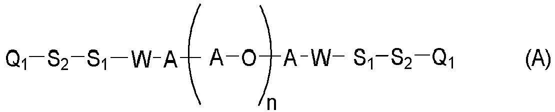 may be produced by a process comprising at least the steps of:
- preparing a mixture comprising at least

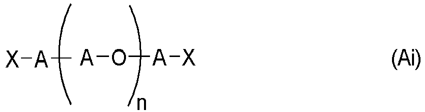

   Q₁-S₂-S₁-Y (Aii)

   wherein
- A is an alkanediyl group, O is oxygen,
- S₁ and S₂ which may be the same or different are nil or a C₁-C₂₀ hydrocarbylene groups optionally interrupted by one or more heteroatoms or heteroatoms containing groups chosen from the list consisting of -O-, -S-, -(C=O)-, -(C=S)-, -CO-NH-,-COO-, -NH-CO-NH-, -NH-COO-;
- W is a divalent group selected from the list consisting of -*CH₂-NH-, -*NH-CH₂-, -*CH₂-NR-, -*NR-CH₂-, -*CH₂-O-, -*O-CH₂-, -*CH₂-S-, -*S-CH₂-, -*S-CH₂-CH₂-, -*CH₂-CH₂-S-, -*NH(C=O)-, -(*C=O)NH-, -*NR(C=O)-, -(*C=O)NR-, -(*C=O)O-, -*O(C=O)-, -NH-CO-NH- and -NH-COO- wherein the atom designed with * is linked to S₁, and R is independently H or a C₁-C₂₀ hydrocarbyl group such as notably a methyl, ethyl, propyl, benzyl, triphenylmethyl, or a benzylidene group;
- X is preferably selected from the list consisting of -H, -OH, -NH₂, -NHR, -(C=O)-Z-COOH, -COOR, -NCO, -CH=CH₂, -CH₂Z more preferably from the list consisting of OH, NH₂, and NHR wherein R is a C₁-C₂₀ hydrocarbylene group such as notably a methyl, ethyl, propyl, benzyl, triphenylmethyl, or a benzylidene group, Z is a leaving group, such as for example halogen;
- Y is a reactive group and capable of reacting with X so as to obtain a bridge W between S₁ and A; Y can be selected from the list consisting of H, -OH, -NH₂, -NHR, -(C=O)-Z -COOH, -COOR, -NCO, -CH=CH₂, -CH₂Z, more preferably from the list consisting of -(C=O)-Z, -COOH, -COOR, wherein R is a C₁-C₂₀ hydrocarbylene group such as notably a methyl, ethyl, propyl, benzyl, triphenylmethyl, or a benzylidene group, Z is a leaving group, such as for example halogen;
- Q₁ is an isocyanuric acid moiety or a barbituric acid moiety;
- n is an integer ranging from 2 and 800, preferably from 4 to 600, more preferably from 6 to 400; and
- reacting group X with group Y so as to obtain the polymer of formula (A).

The invention also concerns a composition comprising at least a functionalized polyalkylene oxide-based polymer of the invention.

Composition of the present invention may also comprise another polymer or a resin. One or more additives may be added to said composition. They may be, for example, at least: an antioxidant, a plasticizer, a mineral filler, an organic filler, a pigment and/or a dye.

The fillers may be chosen in the group constituted by talc, mica, kaolin, calcium carbonate, calcium silicate, magnesium carbonate; glass fibers, carbon fibers, synthetic polymeric fiber, aramid fiber, aluminium fiber, titanium fiber, magnesium fiber, boron carbide fibers, rock wool fiber, steel fiber, wollastonite and mixtures thereof.

Apart from the polymers, additives can additionally be added during the processing to produce the composition of this invention. Such additives may be for instance chosen in the group consisting of: diols, such as linear or branched C₁-C₂₀ alkylene diols, diamines, such as linear or branched C₁-C₂₀ alkylene diamines, diisocyanates, such as linear, branched or cyclic C₁-C₂₀ alkylene diisocyanates, C₁-C₂₀ amino alcohols, C₁-C₂₀ triols, C₁-C₂₀ triamines, C₁-C₂₀ tri-isocyanates or C₁-C₂₀ polyalcohols.

Notably the composition may also comprises a polyalkylene oxide-based polymer functionalized at one or both ends with a nitrogen-containing heterocyclic group bearing at least a function chosen in the group consisting of primary amine and secondary amine.

The nitrogen-containing heterocyclic group, bearing at least a function chosen in the group consisting of primary amine and secondary amine, may be attached to the polyalkylene oxide-based polymer directly with a single bond or via a linker, such as for instance a linear or branched C₁-C₆ alkylene group, ether function, ester function, carboxylic function, amine function, amide function, an urea or carbamate functional group.

The nitrogen-containing heterocyclic group, bearing at least a function chosen in the group consisting of primary amine and secondary amine, may be preferably chosen in the group consisting of (it being understood that all the tautomeric forms are included):
- A substituted or unsubstituted triazine-based group, such as diaminotriazine and melamine;
- A substituted or unsubstituted pyridine-based group, such as diaminopyridine ;
- A substituted or unsubstituted pyrimidine-based group, such as cytosine, and thymine;
- A substituted or unsubstituted pyrazine-based group, such as aminopyrazine;
- A substituted or unsubstituted trimethylene urea-based group, such as monourea or bisurea;
- A substituted or unsubstituted imidazolidine-based group, such as imidazolidone, imidazolidine 2,4-dione (hydantoin);
- A substituted or unsubstituted triazole-based group, such as amino-triazole;
- A substituted or unsubstituted isocytosine-based group, such as alkylisocytosine, and substituted ureido pyrimidinone.

The nitrogen-containing heterocyclic group is preferably a heteroaryl group, such as pyridine, diazine, triazine, tetrazine, imidazole, and pirazole.

The nitrogen-containing heterocyclic group, bearing at least a function chosen in the group consisting of primary amine and secondary amine, may have the general structure of formula (E) as follows: 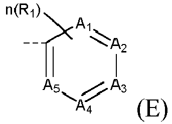 wherein, the ring is a 6-membered aromatic ring wherein A₁, A₂, A₃, A₄ and A₅ are each independently carbon or nitrogen, with the proviso that at least 3 of A₁, A₂, A₃, A₄ and A₅ are carbon atoms, n is from 1 to 4, notably from 1 to 3, notably 1, 2 or 3, each R₁ is independently alkyl, alkenyl, carboxyl, carboxyl ester, amino, hydroxyl, halo, haloalkyl, or heteroaryl, with the proviso that said nitrogen-containing heterocyclic group bears at least a primary amine and/or a secondary amine.

Polyalkylene oxide-based polymer may notably be connected to nitrogen-containing heterocyclic group by a carbon atom of said heterocyclic group, by an oxygen atom of said heterocyclic group or by a nitrogen atom of said heterocyclic group, via a linker or a single bond as previously expressed.

The nitrogen-containing heterocyclic group may bear at least one primary amine function wherein "primary amine" denotes a -NH₂ group.

The nitrogen-containing heterocyclic group may bear at least one secondary amine function wherein "secondary amine" denotes a -NHR group, wherein R is selected from the group consisting of C₁-C₆ alkyl, C₆-C₁₂ aryl, C₇-C₁₂ alkaryl and C₇-C₁₂ alkylaryl groups, wherein the alkyl groups may be linear, branched or cyclic.

Preferably the nitrogen-containing heterocyclic group is substituted or unsubstituted triazine-based heterocyclic group. More preferably, nitrogen-containing heterocyclic group of the invention is derived from a 4,6-diaminotriazine (DAT).

The substituted or unsubstituted nitrogen-containing heterocyclic group of the invention may be H-bonding and may comprise at least two sites capable of H-donor capability and at least one site capable of H-acceptor capability (where these two sites are not be fully reacted). The H-donor site may be a H-donor group well known by those skilled in the art. Such an H-donor group may comprise -NH₂, -NH-, -OH or - SH groups. The H-acceptor site may be a H-acceptor site well known by those skilled in the art. Such an H-acceptor site may comprise atoms like O, N or S.

Preferentially, functionalized polyalkylene oxide-based polymer is DAT-PPO or DATPPO-DAT.

The functionalized polyalkylene oxide based polymers may have a number-average molecular weight (Mₙ) of between 100 and 80000 g/mol, more preferably between 300 and 35000 g/mol, notably between 400 and 25000 g/mol. The number-average molecular weight (Mₙ) may be measured by NMR spectroscopy or by Gel Permeation Chromatography.

The functionalized polyalkylene oxide-based polymer may be a polymer of formula (F) as follows: 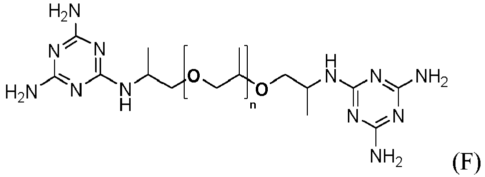 wherein n is comprised between 2 and 1500, preferably from 4 to 625.

The functionalized polyalkylene oxide-based polymer may be a polymer of formula (G) as follows: 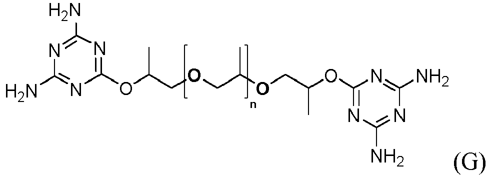 wherein n is comprised between 2 and 1500, preferably from 4 to 625.

The functionalized polyalkylene oxide-based polymer may be a polymer of formula (H) as follows: 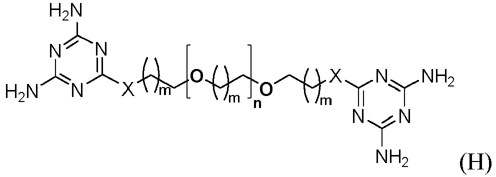 wherein n is comprised between 2 and 1500, preferably from 4 to 625, m is comprised between 1 and 5, X is an oxygen or a nitrogen atom.

Composition of the invention may also comprise a phenol-carbonyl condensation product. Phenol-carbonyl condensation products of the invention are preferably chosen from the group consisting of phenol-aldehyde condensation product and phenol-ketone condensation product.

Phenol-aldehyde or phenol-ketone condensation products are condensation products of phenolic compounds with aldehydes or ketones; in particular a condensation product of at least one phenolic compound with at least one aldehyde and/or one ketone. These condensation reactions are generally catalysed with an acid or a base.

The phenolic compounds may be chosen, alone or as a mixture, from phenol, cresol, xylenol, naphthol, alkylphenols, such as butylphenol, tert-butylphenol, isooctylphenol, nitrophenol, phenylphenol, resorcinol or bisphenol A; or any other substituted phenol.

The aldehyde used most frequently is formaldehyde. However, others may be used, such as acetaldehyde, para-formaldehyde (polyoxymethylene), butyraldehyde, crotonaldehyde, glycoxal and furfural.

As ketone, it is possible to use acetone, methyl ethyl ketone or acetophenone.

According to one particular embodiment of the invention, the phenol-aldehyde condensation product is a condensation product of phenol and formaldehyde.

Preferably, the phenol-carbonyl condensation product is a novolac resin or a resole resin. The composition according to the invention may comprise one or more different types of novolac resin.

Novolacs are phenol-formaldehyde resins with a formaldehyde to phenol molar ratio of less than one. The polymerization is brought to completion using acid-catalysis such as oxalic acid, hydrochloric acid or sulfonate acids. The phenol units are mainly linked by methylene and/or ether groups.

Resole are base-catalysed phenol-formaldehyde resins made with a formaldehyde to phenol ratio of greater than one (usually around 1.5). Phenol, formaldehyde, water and catalyst are usually mixed in the desired amount, depending on the resin to be formed, and are then heated. The first part of the reaction, at around 70°C, forms a thick reddish-brown tacky material, which is rich in hydroxymethyl and benzylic ether groups.

Phenol-carbonyl condensation products are generally have a degree of condensation between 2 and 15. The novolac resins preferably have a degree of condensation between 2 and 15.

Phenol-carbonyl condensation products may have an average molecular weight comprised between 500 and 10000 g/mol, preferably between 500 and 3000 g/mol. It may be measured by gel permeation chromatography (GPC) or by other techniques commonly used by person skilled in the art, as it is well described in Determination of Molecular Weight Distributions of Novolac Resins by Gel Permeation Chromatography, T.R. Dargaville et al., 1996.

The novolac resins used advantageously have an average molecular weight comprised between 500 and 3000 g/mol, preferably between 800 and 2000 g/mol.

As commercial novolac resin, mention may especially be made of the commercial products Durez®, Vulkadur®, Rhenosin® or Nowolac®.

Composition of the invention may notably comprise at least:
(1) from 20 to 80 mol%, preferably from 30 to 50 mol% of a polyalkylene oxide-based polymer functionalized at one or both ends with an isocyanuric acid moiety and/or a barbituric acid moiety, and having a number-average molecular weight (Mn) from 100 to 35000 g/mol, more preferably from 300 to 25000 g/mol; and
(2) from 20 to 80 mol%, preferably from 50 to 70 mol% of a polyalkylene oxide-based polymer functionalized at one or both ends with a nitrogen-containing heterocyclic group bearing at least a function chosen in the group consisting of primary amine and secondary amine;

with respect to the total molar amount of the components (1) and (2).

Composition of the invention may notably comprise at least:
- from 50 to 99 wt%, preferably from 70 to 90 wt% of a polyalkylene oxide-based polymer functionalized at one or both ends with an isocyanuric acid moiety and/or a barbituric acid moiety, and having a number-average molecular weight (Mn) from 100 to 35000 g/mol, more preferably from 300 to 25000 g/mol; and
- from 1 to 50 wt%, preferably from 10 to 30 wt% of a phenol-carbonyl condensation product
with respect to the total weight of the composition.

Composition of the invention may notably comprise at least:
- from 20 to 80 wt%, preferably from 30 to 50 wt% of a polyalkylene oxide-based polymer functionalized at one or both ends with an isocyanuric acid moiety and/or a barbituric acid moiety, and having a number-average molecular weight (Mn) from 100 to 35000 g/mol, more preferably from 300 to 25000 g/mol;
- from 20 to 80 wt%, preferably from 50 to 70 wt% of a polyalkylene oxide-based polymer functionalized at one or both ends with a nitrogen-containing heterocyclic group bearing at least a function chosen in the group consisting of primary amine and secondary amine; and
- from 1 to 50 wt%, preferably from 10 to 30 wt% of a phenol-carbonyl condensation product
with respect to the total weight of the composition.

Preferably, the molar ratio between the polyalkylene oxide-based polymer functionalized at one or both ends with an isocyanuric acid moiety and/or a barbituric acid moiety, and having a number-average molecular weight (Mn) from 100 to 35000 g/mol, more preferably from 300 to 25000 g/mol and the polyalkylene oxide-based polymer functionalized at one or both ends with a nitrogen-containing heterocyclic group bearing at least a function chosen in the group consisting of primary amine and secondary amine may range from 1:0.25 to 1:4, preferably 1:1 to 1:2.

A composition according to the present invention may be obtained for instance by blending, notably with a mechanical blender followed by an extrusion process. It is also possible to blend the polymer of the invention with other polymers and/or additives in a solvent media via a solvent-casting technique, such as for instance in ethyl acetate, acetone, chloroform or dichloromethane.

The invention also relates to a process for preparing the composition of the invention comprising at least the steps of
- preparing a mixture comprising at least one functionalized polymer of the invention and a liquid,
- preparing a mixture comprising at least an other polymer, such as polyalkylene oxide-based polymer functionalized at one or both ends with a nitrogen-containing heterocyclic group bearing at least a function chosen in the group consisting of primary amine and secondary amine and a liquid,
- mixing the two mixtures under stirring so as to obtain a mixture,
- removing the liquid so as to obtain the desired composition.

The invention also relates to a process for preparing the composition of the invention comprising at least the steps of:
- preparing under stirring and heating up to a temperature of 10 to 200°C a mixture comprising at least the polymer of the invention and at least an other polymer, such as polyalkylene oxide-based polymer functionalized at one or both ends with a nitrogen-containing heterocyclic group bearing at least a function chosen in the group consisting of primary amine and secondary amine, and optionally at least an other additive such a phenol-carbonyl condensation product;
- cooling the mixture so as to obtain the desired composition as a solid.

Compositions of the present invention may have a glass transition temperature from -80 to -20°C, preferably from -60°C to -20°C, more preferably from -60°C to -30°C, notably from -50°C to -40°C.

The invention also concerns then a composition comprising at least 2 polyalkylene oxide-based polymers and having a glass transition temperature from -60 to -20°C.

Composition of the present invention may also have a Cross-Over point from 10 to 200°C, preferably from 20 to 150°C. Cross-Over point denotes the temperature at which the physical crosslinkers (which assume the cohesion of the system) dissociate. Cross-Over point may notably by rheological measurement, such as with a RDA III instrument with TA orchestrator software, equipped with a parallel plates geometry (diameter 8 mm or 25 mm). The linear domain was firstly determined, and a temperature sweep at 10 rad/s between Tmin and Tmax at 2°C/min was acquired. Finally, angular frequency sweep at different temperatures are performed allowing the construction of Time-Temperature-Superposition (TTS) mastercurves. Cross-Over point is measured on the Tsweep curve at the temperature where moduli G' and G" cross.

Compositions of the present invention may have an elongation at break from 0.5% to 700%. Elongation at break may be measured for instance by using mechanical UTM instrument, which determines the value as strain on the material at break from the change in position of the cross-head, during measurement of the stress-strain characteristics of the material.

The present invention also relates to an article or a part of an article comprising the functionalized polymer of the invention or a composition comprising at least the functionalized polymer of the invention.

Articles may be for instance, used as additives, coatings, adhesive compositions, sealing compositions, thickeners, composites, gelling agents and binders.

Preferably, these articles are produced from a composition as described above by injection molding, by extrusion or by blow molding.

The composition according to the invention may be for instance used for the following applications:
- additives in the processing of thermoplastics to effect reversible crosslinking; affecting as processing aid, toughening agent and/or for self-healing properties;
- additives in the formulation of rubber;
- as a component in resin formulations for fiber-reinforced composites
- as one of the layers or additive to the formulation for one of the layers in coating;
- anti-corrosion additives, in particular in protective coatings;
- additives to facilitate recycling of thermoplastic substances by destruction of the hydrogen bonds by a specific solvent;
- additives for impact modification in polymers, in particular in polyamides;
- as adhesive or as additive to adhesive formulations; and
- materials for printed circuits.

The composition according to the present invention is very useful in coating applications such as decorative, protective, thermos-reversible and self-healing coatings, adhesive compositions, sealing compositions, as thickener, gelling agents or binder, and in imaging or biomedical applications.

Specific language is used in the description so as to facilitate the understanding of the principle of the invention. It should, however, be understood that no limitation of the scope of the invention is envisioned by the use of this specific language. Modifications, improvements and refinements may especially be envisioned by those skilled in the art of the technical field concerned on the basis of their own general knowledge.

Other details and advantages of the invention will emerge more clearly in the light of the examples below, which are given purely for indicative purposes.

### EXPERIMENTAL PART

The disclosure will now be illustrated with working examples, which is intended to illustrate the working of disclosure and not intended to take restrictively to imply any limitations on the scope of the present disclosure. Other examples are also possible which are within the scope of the present disclosure.

### Reagents and solvents

Jeffamine®-D Series were provided by Huntsman. PPO-18000 (Mn = 18000 g/mol, Acclaim® Polyol 18200N) was provided by Covestro. The other reagents were purchased from Sigma-Aldrich, Acros or Alfa-Aesar. All chemicals were used as received without any further purification.

### ¹H and ¹³C NMR

The NMR spectra were recorded on a Brüker AV 400 MHz at 300 K. The solvents used were CDCl₃ or DMSO-d₆. The chemical shifts (δ) are expressed in ppm, using the signal of residual solvent as an intern reference. The signals multiplicity is indicated as follows: s (singulet), bs (broad singulet), d (doublet), m (multiplet).

### Thermal Gravimetric Analysis (TGA)

TGA experiments were performed under nitrogen on a Perkin Elmer TGA 4000 instrument to determine the thermal stability of the materials. 20-30 mg of product are analyzed in a ceramic crucible from 40°C to 800°C at 10°C/min. This first thermal analysis allows to determine the maximum temperature (Tₘₐₓ) for the rheological experiments (working temperature is selected 10°C below the temperature at which the sample exhibits a weight loss of 1%wt)

### Differential scanning calorimetry (DSC)

DSC experiments were performed under nitrogen on a Perkin Elmer DSC 8000 instrument in order to determine the melting/crystallization temperatures (Tm, Tc) and the glass transition temperature (Tg) of the materials. 5-8 mg of product are analyzed in an aluminium crucible. Three heating/cooling cycles are performed between -60°C and Tₘₐₓ (determined by TGA). The first cycle at 10°C/min allows erasing the thermal history of the sample. The second and third cycles are performed at 10°C/min and 40°C/min, respectively.

### Rheology characterization

The rheological properties were investigated on a RDA III instrument with TA orchestrator software, equipped with a parallel plates geometry (diameter 8 mm or 25 mm). The linear domain was firstly determined, and a temperature sweep at 10 rad/s between Tₘᵢₙ and Tₘₐₓ at 2°C/min was acquired. Finally, angular frequency sweep at different temperatures are performed allowing the construction of Time-Temperature-Superposition (TTS) mastercurves.

### Mechanical characterization

Tensile test experiments were recorded on a ZWICK Z20 apparatus with Imetrum video gauge technology to enable high resolution optical measurement of strain and displacement in structural monitoring. The materials were prepared as dog-bone samples (type 5A) and submitted to a pre-load of 0.1N, and a deformation rate of 1 mm/min.

### Comparative Example 1: preparation of UPy-PPO-UPy

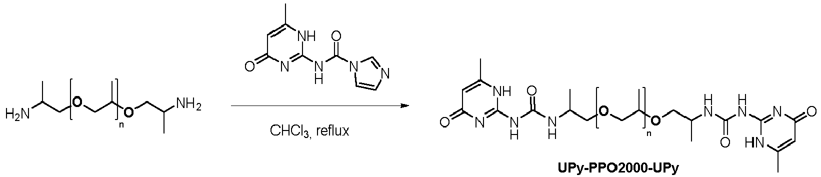

The telechelic end-grafting of PPO chains by an ureiodopyrimidinone moiety (UPy) was carried out following an adapted experimental procedure from the work described by R. P. Sijbesma et al. (Macromolecules 2007, 23, 8464).

To a 1L double-jacketed glass reactor equipped with a condenser, a mechanical stirrer with four inclined blades, and a temperature probe were added under inert atmosphere Jeffamine D-2000 (15 mmol), 530 g of chloroform (stabilized on amylene) and UPy-CDI (N-(6-methyl-4-oxo-1,4-dihydropyrimidin-2-yl)-1H-imidazole-1-carboxamide, 45 mmol). The reaction was heated to reflux at a temperature of 70°C and stirred for 4 h. The mixture was cooled down to 25°C and filtered to remove insoluble materials. The filtrate was then washed with water (3 x 200 g) and evaporated under reduced pressure leading to a yellow oily residue in 95% yield.

¹H (400MHz, CDCl₃) δ 13.10 (bs, 2H, NH), 11.85 (bs, 2H, NHCO), 9.98 (d, 2H, NHCO), 5.78 (s, 2H, CH=), 3.98 (m, 2H, CHMe), 3.57-3.34 (m, 110H), 2.19 (s, 6H, CH₃), 1.22 (d, 6H, CH₃CH), 1.11 (m, 105H).

### Comparative Example 2: preparation of THY-PPO-THY

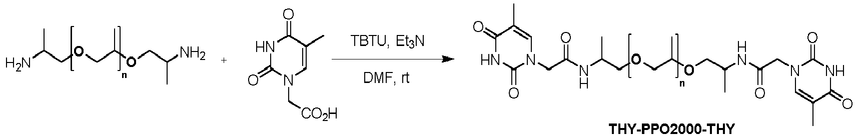

The telechelic end-grafting of PPO chains by a thymine moiety was carried out following the experimental procedure described by L. Leibler et al. (J. Am. Chem. Soc. 2011, 49, 19672).

Thymine-1-acetic acid (110 mmol) was dissolved in DMF (250 mL). NH₂-PPO2000-NH₂ (Jeffamine® D-2000, 50 mmol), TBTU (O-(Benzotriazol-1-yl)-*N,N,N',N'-*tetramethyluronium tetrafluoroborate, 125 mmol) and triethylamine (400 mmol) were then added. The reaction was stirred at room temperature for 16 h and subsequently quenched with water (250 mL). The reaction mixture was extracted with toluene (2 x 500 mL). The combined organic extracts were washed with water (2 x 500 mL), concentrated under reduced pressure, and dried at 100 °C under vacuum leading to THY-PPO2000-THY in 86% yield.

RMN ¹H (400MHz, DMSO-*d₆*) δ 11.23 (s, 2H), 7.96 (m, 2H), 7.35 (s, 2H), 4.23 (s, 4H), 3.83 (m, 2H), 3.25-3.60 (m, 126H) 1.73 (s, 6H), 1.01 (d, 128H).

### Example 1: preparation of benzyl 2-(2,4,6-trioxo-1,3,5-triazinan-1-yl)acetate

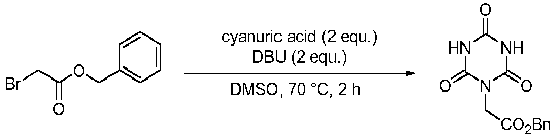

To a 3L double-jacketed glass reactor equipped with a condenser, a mechanical stirrer with four inclined blades, and a temperature probe were added under inert atmosphere cyanuric acid (1.29 mol), 1120 g of dimethylsulfoxide and 1,8-diazabicyclo[5.4.0]undec-7-ene (DBU) (1.29 mol). The suspension was heated to 70°C and stirred at this temperature until full dissolution. Benzyl bromoacetate was then added dropwise over 15 min at 70°C, and the reaction mixture was stirred at this temperature for 2 h. The reaction media was cooled down to 15°C and 1000 g of water were added to precipitate the excess of cyanuric acid. The solid was filtered off and the filtrate was extracted with ethyl acetate (4 x 950g). The combined organic extracts were concentrated under reduced pressure. The oily residue was precipitated by the addition of water (200 g). The resulting solid was washed with water to remove residual amount of dimethylsulfoxide, and dried at 75°C under reduced pressure. The solid was finally washed with dichloromethane (3 x 1000g) and toluene (2 x 500g) to remove the undesired di- and tri-substituted byproducts. After drying at 75°C for 12 h under reduced pressure, the expected monosubstituted product was obtained in 35% yield as a white powder.

¹H (400MHz, DMSO-*d₆*) δ 11.70 (s, 2H, NH), 7.34-7.39 (m, 5H, Ph), 5.19 (s, 2H, CH₂-Ph), 4.49 (s, 2H, N-CH₂); ¹³C (100MHz, DMSO-d₆) δ 167.56, 149.41, 148.29, 135.47, 128.40, 128.14, 127.85, 66.45, 41.54.

### Example 2: preparation of ICA-PPO-ICA

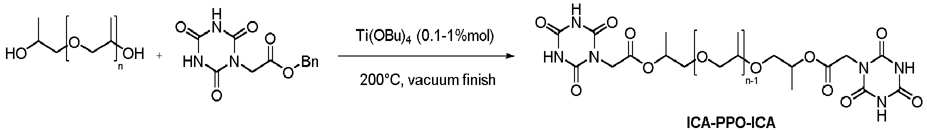

To a 50 mL glass reactor equipped with anchor stirrer were added under nitrogen flush OH-PPO-OH (10 mmol) (Mn 2000 g/mol or Mn 425 g/mol), benzyl 2-(2,4,6-trioxo-1,3,5-triazinan-1-yl)acetate (20 mmol) and titanium butoxide (0.25wt%). Slow stirring was started and the reactor was immersed in the Wood's alloy bath previously heated at 210°C. These conditions were maintained at atmospheric pressure during 2 h. Then vacuum pump is started and the pressure is slowly decreased to 4 mbar. The conditions are maintained during 4.5 h to improve the conversion. The material was obtained in quantitative yields with conversions up to 90%: a conversion of 85% is reached by using a PPO of Mn=2000 g/mol, and a conversion of 90% is reached with a PPO of Mn=425 g/mol.

NMR profile of ICA-PPO2000-ICA:
¹H (400MHz, DMSO-*d₆*) δ 11.70 (s, 4H, NH), 4.94 (m, 2H, CHCH₃), 4.40 (s, 4H, NCH₂), 3.60-3.30 (m, 112H, CH+CH₂ PPO), 1.16 (d, 6H, CH₃CH), 1.06-1.04 (m, 105H, CH₃ PPO).

### Example 3: preparation of DAT-PPO-DAT

### 1) Reaction with NH₂-PPO-NH₂

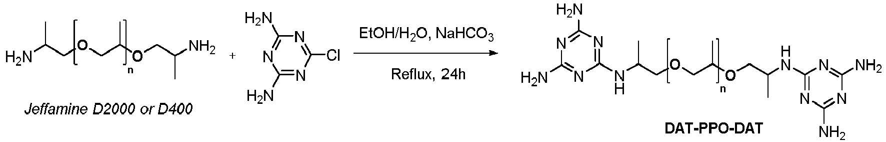

To a 1L double-jacketed glass reactor equipped with a condenser, a mechanical stirrer with four inclined blades, and a temperature probe were added under inert atmosphere NH₂-PPO-NH₂ (30 mmol) (Jeffamines® D-2000 or Jeffamines® D-400), 430 g of a water/ethanol mixture (50/50 v/v), NaHCO₃ (66 mmol) and 2-chloro-4,6-diamino-1,3,5-triazine (66 mmol). The resulting suspension was heated to reflux and stirred at this temperature for 24 h. The reaction mixture was then cooled down to 20°C and filtered to remove the excess of DAT-Cl. The filtrate was concentrated under reduced pressure to remove ethanol. After extraction with toluene (3 x 300mL), the combined organic layers were evaporated under reduced pressure leading to DAT-PPO-DAT as a slightly yellow viscous material. A yield of 86% is obtained for DAT-PPO2000-DAT (obtained with Jeffamines® D-2000), and a yield of 45% is obtained for DAT-PPO400-DAT (obtained with Jeffamines® D-400)

NMR profile of DAT-PPO2000-DAT:
¹H (400MHz, DMSO-*d₆*) δ 6.20-5.80 (m, 10H, NH₂+NH), 4.04 (m, 2H, CHCH₃), 3.75-3.00 (m, 140H, CH+CH₂ PPO), 1.03 (m, 135H, CH₃ PPO).

### Example 4: preparation of supramolecular blends

The blends of supramolecular materials were prepared following a solvent-casting procedure in chloroform or acetone. For instance preparation of Suprapolymer blend made of DAT-PPO2000-DAT /ICA-PPO2000-ICA in 1/1 molar ratio has been made as follows: to a 250 mL flask with a magnetic stirrer were added 5.0 g of DAT-PPO2000-DAT (2.3 mmol) and 40 mL of chloroform (or acetone). The mixture was stirred at 25°C for 0.5 h. To this colorless mixture was added a solution of 5.28 g of ICA-PPO2000-ICA (2.3 mmol) in 50 mL of chloroform (or acetone). An increase of the viscosity was observed; the resulting syrup was stirred for 0.5 h at 25°C. The solution of the supramolecular material was concentrated to dryness under reduced pressure leading to a solid residue that was ready for rheological or mechanical characterization.

### Example 5: rheological properties

Compositions illustrated in the following Table 1 were thus prepared, as well as three control compositions, and their rheological properties measured and reported.

**Table 1**

| **Compositions** | **Molar ratio** | **Cross-Over point (°C)** | **Plateau Modulus G°_{N} (Pa)** | **Broadening of Rubbery Plateau (°C)** |
|---|---|---|---|---|
| Comparison 1: PPO18000 | na | -37 | 3.8.10⁵ | 20 |
| Comparison 2: UPy-PPO-UPy | na | +1 | 4.1.10⁵ | 39 |
| Comparison 3: DAT-PPO2000-DAT and THY-PPO-THY | 1:1 | -11 | 1.2.10⁶ | 27 |
| Composition 1 DAT-PPO2000-DAT and ICA-PPO2000-ICA | 1:1 | +52 | 7.0.10⁵ | 90 |
| Composition 2 DAT-PPO2000-DAT and ICA-PPO2000-ICA | 2:1 | +37 | 1.7.10⁵ | 75 |
| Composition 3 DAT-PPO2000-DAT and ICA-PPO425-ICA | 1:1 | +130 | 2.0.10⁷ | 110 |

| | | | | |
|---|---|---|---|---|
| Cross-Over point (°C) is measured on the Tsweep curve at the temperature where moduli G' and G" cross. It denotes the temperature at which the physical crosslinkers (which assume the cohesion of the system) dissociate Modulus G°_{N} (Pa) is measured on the TTS master curve. It corresponds to the value of G' at the minimum of tanδ Broadening of Rubbery Plateau (°C) is measured on the Tsweep curve and covers the range of temperatures comprised between the lowest (T_{g}) and the highest (T_{dissociation}) (G',G") cross over points | | | | |

It appears then that supramolecular interactions through hydrogen bond technology in the composition of the invention can dramatically increase the properties of low Tg materials. Supramolecular associations confer to a reference system (PPO polymer) which has the viscosity of water at room temperature: rheological performances which demonstrate an upgrading of their usage temperature and high cohesive reinforcement properties due to the efficiency of the hydrogen bond crosslinking moieties.

Notably, composition 3 shows a cohesive 3D network with a usage temperature up to 120°C and a crossover between G' & G" up to 130°C and a very high and broad Rubbery Plateau. Said composition also provides a very high viscoelastic behavior with a η* = 2.10⁶ Pa.s at 60°C and η* = 3.10⁵ Pa.s at 120°C.

Modulus G' is also reported for the compositions at -20°C, 20°C and 80°C in Table 2 to denote the thermal stability of functionalized polyalkylene oxide-based polymers of the invention

**Table 2**

| **Compositions** | **Molar ratio** | **Modulus G' at -20°C (Pa)** | **Modulus G' at 20°C (Pa)** | **Modulus G' at 80°C (Pa)** |
|---|---|---|---|---|
| Comparison 1: PPO18000 | na | 2.10³ | 5 | <<1 |
| Comparison 2: UPy-PPO-UPy | na | 4.10⁵ | 3.10³ | <<1 |
| Comparison 3: DAT-PPO2000-DAT and THY-PPO2000-THY | 1:1 | 9.10⁵ | 8 | <<1 |
| Composition 1 DAT-PPO2000-DAT and ICA-PPO2000-ICA | 1:1 | 8.10⁵ | 8.10⁵ | 2.10³ |
| Composition 2 DAT-PPO2000-DAT and ICA-PPO2000-ICA | 2:1 | 4.10⁵ | 4.10⁵ | 7.10² |
| Composition 3 DAT-PPO2000-DAT and ICA-PPO425-ICA | 1:1 | 2.10⁷ | 2.10⁷ | 1.10⁶ |

It appears then that high cohesive properties (i.e. high values of G' storage modulus) are maintained up to 80°C for compositions 1 to 3, while comparative examples 1 to 3 do not present the same feature, with a dramatically decrease of the G' modulus even at room temperature.

### Example 6: mechanical performances

Young Modulus and Elongation at break of compositions 1 and 3 have been measured and reported in Table 3.

**Table 3**

| **Compositions** | **Young Modulus (MPa)** | **Elongation at break (%)** |
|---|---|---|
| Composition 1 DAT-PPO2000-DAT and ICA-PPO2000-ICA | 4 | 70 |
| Composition 3 DAT-PPO2000-DAT and ICA-PPO425-ICA | 115 | 1.5 |

It appears then that the developed materials exhibit very interesting Modulus-reinforcement properties. Depending of the compositions, the mechanical properties of the material can be adjusted to the requirements of the applicative domain.

### Example 7: mechanical performances and self-healing

Composition A: Experiment has been performed with Novolac of type Nowolak S (LERG S.A., Poland). The Novolac resin powder (1 gm) was taken in an aluminium sheet and equal amount of ICA-PPO-ICA (1 gm) was added. The components were mixed well at 25°C, using a spatula for 4 min forming a thick paste. The mixture was then heated at 100°C with stirring and till the viscosity of the material reduces forming a flowable mass. The yellow to brown coloured viscous liquid was poured into a mould and casted into a small bar of dimension about 40 mm x 10.0 mm x 2.5 mm. Composition B: Experiment has been performed with Novolac of type Nowolak S (LERG S.A., Poland). Equal amounts of DAT-PPO-DAT and ICA-PPO-ICA were mixed together at 25°C using a spatula. The Novolac resin powder (1 gm) was taken in an aluminium sheet and an equal amount of the DAT-PPO-DAT - ICA-PPO-ICA mixture (total 1 gm) was added. The mixture was then heated to 140°C with stirring and till the viscosity of the material reduces forming a flowable mass. The yellow to brown coloured viscous liquid was poured into small mould and casted into a small bar of dimension about 40 mm x 10.0 mm x 2.5 mm.

Tensile properties of the test samples, with dimensions of approximately 40 mm x 10.0 mm x 2.5 mm, were measured using UTM (Zwick Roell, UTM-030), by application of strain at the rate of 1 mm/min. During tensile test measurement, failure of some of the samples occurred from the centre or grip. This is specifically observed for the samples which either have no ductility or were healed at 20°C. The samples which have ductility i.e to say DAT-PPO-DAT and 50% Novolac, DAT-PPO-DAT and 50% Novolac-After healing at 50°C, DAT-PPO-DAT and ICA-PPO-ICA and 50% Novolac, DAT-PPO-DAT and ICA-PPO-ICA and 50% Novolac-After healing at 60°C, the tensile test was performed at least up to 15% elongation point.

For the self-healing studies, the tensile bars of ductile samples were broken into two pieces by hand from the center whereas for the non-ductile materials, the samples that broke near the center of the bar during tensile test were used. Broken pieces of the tensile bar sample were reattached by hand and pressed for 2 minutes and subsequently kept without any extra pressure for another period of 30 minutes at 25°C and 50°C (for ICA-PPO-ICA + Novolac) or 60°C (for DAT-PPO-DAT + ICA-PPO-ICA + Novolac), respectively. Samples which were healed at 50°C or 60°C were kept for another 30 minutes for thermal relaxation, and then samples were again tested by using the method described above. Measurement of mechanical properties before and after healing is expressed in Table 4.

**Table 4**

| **S.No.** | **Sample Description** | **Modulus (Mpa)** | **Tensile Strength (MPa)** | **%Elongation** |
|---|---|---|---|---|
| **Comp** | 50wt% PPO-2000 + 50 wt% Novolac | Very soft | ND | ND |
| | | | | |
| **A1** | 50wt% ICA-PPO-ICA + 50wt% Novolac | 173 | 1.11 | 1.6 |
| **A2** | 50wt% ICA-PPO-ICA + 50wt% Novolac After healing @ 25°C | 207 | 0.86 | 1 |
| | | | | |
| **B1** | 25wt% ICA-PPO-ICA + 25wt% DAT-PPO-DAT + 50wt% Novolac | 191 | 1.15 | Ductile |
| **B2** | 25wt% ICA-PPO-ICA + 25wt% DAT-PPO-DAT + 50wt% Novolac After healing @ 25°C | 172 | 0.83 | 1.7 |
| **B3** | 25wt% ICA-PPO-ICA + 25wt% DAT-PPO-DAT + 50wt% Novolac After healing @ 60°C | 192 | 1.01 | Ductile |

| | | | | |
|---|---|---|---|---|
| ND = Measurement was not done (PPO-2000 material was too soft gripping on the sample holder and could not be measured). Ductile material = elongation of at least 15%. Tensile Strength = the maximum value of the tensile stress Novolac = "Nowolak S" grade in all cases | | | | |

It appears then that a composition according to the invention with a sufficient level of stiffness and strength, such as described above, can be self-healed, regaining about 75% of the original strength, after two broken parts of the material are joined together and kept for about half an hour at room temperature. If the self-healing process is performed at higher temperatures, almost full recovery of strength and also the ductility of the material is achieved.

## Claims

1. A polyalkylene oxide-based polymer functionalized at one or both ends with an isocyanuric acid moiety and/or a barbituric acid moiety, and having a number-average molecular weight (Mn) from 100 to 35000 g/mol, more preferably from 300 to 25000 g/mol.

2. Polyalkylene oxide-based polymer according to claim 1 wherein the polyalkylene oxide-based polymer comprises a backbone selected from the group consisting of: polyethylene oxides, polypropylene oxides, polytetramethylene oxides (i.e polybutylene oxides), polyethylene oxide-polypropylene oxide copolymers, and polypropylene oxide-polybutylene oxide copolymers or block copolymers of such units.

3. Polyalkylene oxide-based polymer according to claim 1 or 2 wherein the polyalkylene oxide-based polymer comprises a backbone of polypropylene oxide.

4. Polyalkylene oxide-based polymer according to anyone of claims 1 to 3 wherein the isocyanuric acid moiety is as follows:

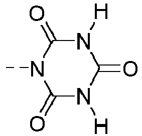

5. Polyalkylene oxide-based polymer according to anyone of claims 1 to 3 wherein the barbituric acid moiety is as follows:

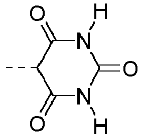

6. Polyalkylene oxide-based polymer according to anyone of claims 1 to 5 wherein the polymer:
- corresponds to formula (A) as represented hereinafter: 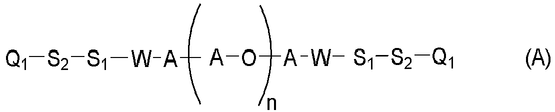 wherein
- A is an alkanediyl group, O is oxygen;
- S₁ and S₂ which may be the same or different are nil or a C₁-C₂₀ hydrocarbylene groups optionally interrupted by one or more heteroatoms or heteroatoms containing groups chosen from the list consisting of -O-, -S-, -(C=O)-, -(C=S)-, -CO-NH-,-COO-,
- NH-CO-NH-, -NH-COO-;
- W is a divalent group selected from the list consisting of -*CH₂-NH-, -*NH-CH₂-, -*CH₂-NR-, -*NR-CH₂-, -*CH₂-O-, -*O-CH₂-, -*CH₂-S-, -*S-CH₂- , -*S-CH₂-CH₂-, -*CH₂-CH₂-S-, -*NH(C=O)-, -(*C=O)NH-, -*NR(C=O)-, -(*C=O)NR-,-(*C=O)O-, -*O(C=O)-, -NH-CO-NH- and -NH-COO- wherein the atom designed with * is linked to S₁, and R is independently H or a C₁-C₂₀ hydrocarbyl group;
- Q₁ is an isocyanuric acid moiety or a barbituric acid moiety; and
- n is an integer ranging from 2 and 800, preferably from 4 to 600, more preferably from 6 to 400,
or
- is a polymer of formula (B) as follows: 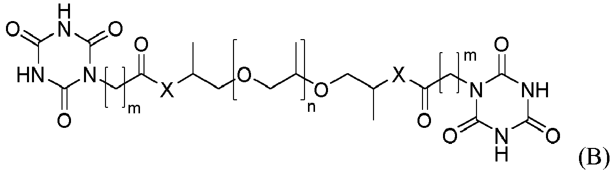 wherein n is comprised between 2 and 800, preferably from 4 to 600, more preferably from 6 to 400, m is comprised between 0 and 20, preferably from 1 to 12, X is an oxygen or a nitrogen atom,
or
- is a polymer of formula (C) as follows: 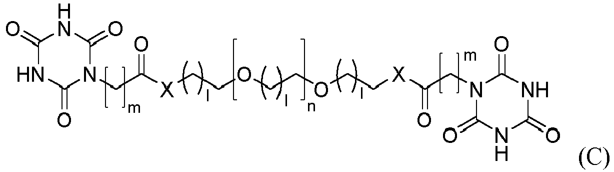 wherein n is comprised between 2 and 800, preferably from 4 to 600, more preferably from 6 to 400, m is comprised between 0 and 20, preferably from 1 to 12, 1 is comprised between 1 and 5, X is an oxygen or a nitrogen atom,
or
- is a polymer of formula (D) as follows: 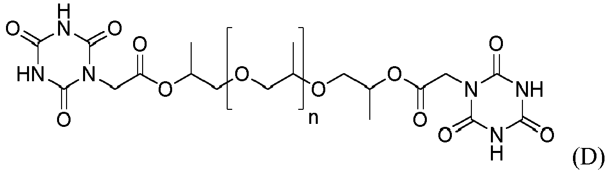 wherein n is comprised between 2 and 800, preferably from 4 to 600, more preferably from 6 to 400.

7. A process for the production of a functionalized polyalkylene oxide-based polymer according to anyone of claims 1 to 6 wherein the polymer is prepared by polymerization or reaction between a polyalkylene oxide-based polymer intermediate and a compound comprising an isocyanuric acid moiety and/or a barbituric acid moiety.

8. A composition comprising at least a functionalized polyalkylene oxide-based polymer according to anyone of claims 1 to 7.

9. Composition according to claim 8 wherein it comprises a polyalkylene oxide-based polymer functionalized at one or both ends with a nitrogen-containing heterocyclic group bearing at least a function chosen in the group consisting of primary amine and secondary amine.

10. Composition according to claim 9 wherein the nitrogen-containing heterocyclic group, bearing at least a function chosen in the group consisting of primary amine and secondary amine, is attached to the polyalkylene oxide-based polymer directly with a single bond or via a linker, such as for instance a linear or branched C₁-C₆ alkylene group, ether function, ester function, carboxylic function, amine function, amide function, an urea or carbamate functional group.

11. Composition according to claim 9 or 10 wherein the nitrogen-containing heterocyclic group of the invention is derived from a 4,6-diaminotriazine.

12. Composition according to anyone of claims 9 to 11 wherein the polyalkylene oxide-based polymer functionalized at one or both ends with a nitrogen-containing heterocyclic group bearing at least a function chosen in the group consisting of primary amine and secondary amine has a number-average molecular weight (Mₙ) of between 100 and 80000 g/mol, more preferably between 300 and 35000 g/mol, notably between 400 and 25000 g/mol.

13. Composition according to anyone of claims 9 to 12 wherein the polyalkylene oxide-based polymer functionalized at one or both ends with a nitrogen-containing heterocyclic group bearing at least a function chosen in the group consisting of primary amine and secondary amine is:
- a polymer of formula (F) as follows: 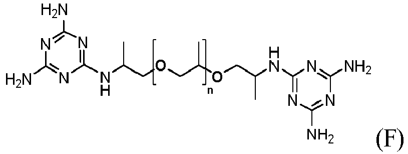 wherein n is comprised between 2 and 1500, preferably from 4 to 625, or
- a polymer of formula (G) as follows: 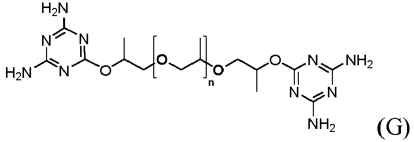 wherein n is comprised between 2 and 1500, preferably from 4 to 625, or
- a polymer of formula (H) as follows: 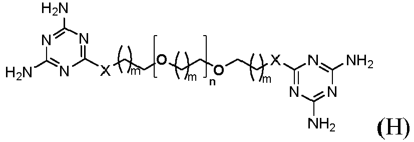 wherein n is comprised between 2 and 1500, preferably from 4 to 625, m is comprised between 1 and 5, X is an oxygen or a nitrogen atom.

14. Composition according to anyone of claims 8 to 13 wherein it comprises a phenol-carbonyl condensation product.

15. Composition according to claim 14 wherein the phenol-carbonyl condensation product is a novolac resin or a resole resin.

16. Composition according to anyone of claim 8 to 15 wherein the composition comprises at least:
- a polyalkylene oxide-based polymer functionalized at one or both ends with an isocyanuric acid moiety and/or a barbituric acid moiety, and having a number-average molecular weight (Mn) from 100 to 35000 g/mol, more preferably from 300 to 25000 g/mol;
- a polyalkylene oxide-based polymer functionalized at one or both ends with a nitrogen-containing heterocyclic group bearing at least a function chosen in the group consisting of primary amine and secondary amine; and
- a phenol-carbonyl condensation product.

17. A composition comprising at least 2 polyalkylene oxide-based polymers and having a glass transition temperature from -60 to -20°C.

18. Composition according to claim 17 having a Cross-Over point from 10 to 200°C, preferably from 20 to 150°C.

19. An article manufactured from a composition according to anyone of claims 8 to 18.
